# EUROPÄISCHE PATENTSCHRIFT

(11) **EP 0 722 978 B1**
(45) Veröffentlichungstag und Bekanntmachung des Hinweises auf die Patenterteilung: **08.12.1999**
(21) Anmeldenummer: 96100462.9
(22) Anmeldetag: 13.01.1996
(51) Int. Cl.: C08K 5/00, C08L 101/00

(54) **Antistatisch ausgerüstete, gefärbte thermoplastische Formmassen**
Antistatically equipped coloured thermoplastic moulding matters
Matière de montage thermoplastique colorée rendue antistatique

(30) Priorität: 23.01.1995 DE 19501907
(43) Veröffentlichungstag der Anmeldung: 24.07.1996
(73) Patentinhaber: BASF AKTIENGESELLSCHAFT, 67056 Ludwigshafen (DE)
(72) Erfinder: Fischer, Wolfgang, Dr., D-67067 Ludwigshafen (DE); Hennig, Karl, D-67258 Hessheim (DE); Mosbach, Norbert, D-67133 Maxdorf (DE); Neumann, Rainer, Dr., D-67112 Mutterstadt (DE); Niedermaier, Bernd, D-67069 Ludwigshafen (DE)

(56) Entgegenhaltungen:
- EP-A- 0 211 651
- EP-A- 0 267 695
- CH-A- 457 844
- GB-A- 1 134 949
- US-A- 4 639 502

## Beschreibung

Die vorliegende Erfindung betrifft thermoplastische Formmassen, enthaltend
A) einen in diesen Formmassen löslichen Farbstoff und
B) ein N,N-Bis(2-hydroxyethyl)-C₆-C₂₂-alkylamin oder N,N-Bis(2-hydroxyethyl)-C₆-C₂₂-alkenylamin, wobei diese Verbindung eine Hazen-Farbzahl nach DIN 53409 unter 300 hat.

Weiterhin betrifft die Erfindung die Verwendung dieser Formmassen zur Herstellung von Formkörpern, sowie Formkörper aus diesen Formmassen.

Kunststoffmassen enthalten meistens Zusatzstoffe verschiedenster Art, welche die Formmassen für bestimmte Anwendungen geeignet machen, darunter auch, wie allgemein bekannt ist, Antistatika, die der unerwünschten elektrostatischen Aufladung der Kunststoffe entgegenwirken.

Für diesen Zweck werden vielfach N,N,-Bis(2-hydroxyethyl)-C₆-C₂₂-alkylamine oder -alkenylamine verwendet, die z.T. handelsüblich sind.

Handelt es sich um Kunststoffe, die mit löslichen Farbstoffen eingefärbt sind, so haben diese Bis(hydroxyethyl)amine den Nachteil, daß sie die Färbung beeinträchtigen, und zwar umso mehr, je höher die Verarbeitungstemperaturen bei der Herstellung der Formmassen und der Formkörper sind und je weniger rein das Antistatikum von vornherein ist.

Der Erfindung lag daher die Aufgabe zugrunde, diesem Nachteil abzuhelfen.

Demgemäß wurden die eingangs definierten thermoplastischen Formmassen gefunden.

Zur transparenten Einfärbung der Formmassen kommen lösliche Farbstoffe verschiedener Struktur in Betracht, z.B. Azofarbstoffe, Anthrachinonfarbstoffe, Monomethinfarbstoffe sowie Indulin- und Nigrosinbasen. Handelt es sich um Komplexverbindungen, sind solche des Chroms bevorzugt. Näheres hierzu ist der Monographie "Einfärben von Kunststoffen", Hrg. Verein Deutscher Ingenieure, VDI-Verlag Düsseldorf 1975, S. 225ff zu entnehmen.

Ein für die transparente Einfärbung von Kunststoffen besonders wichtiger Farbstoff ist der gelbe Monomethinfarbstoff Solvent Yellow 93 (Color Index-Nr. 48160) der Struktur

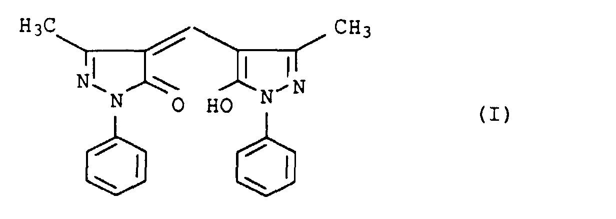

Die Konzentration der löslichen Farbstoffe in den Formmassen richtet sich nach der gewünschten Farbintensität und beträgt allgemein 0,00005 bis 5, besonders 0,0001 bis 2,5 Gew.-%.

Die Komponente B) der erfindungsgemäßen thermoplastischen Formmassen ist ein N,N-Bis(2-hydroxyethyl)-C₆-C₂₂-alkylamin bzw. ein N,N-Bis(2-hydroxyethyl)-C₆-C₂₂-alkenylamin und hat demnach die Struktur 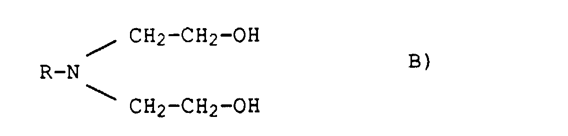 wobei R ein C₆-C₂₂-Alkylrest bzw. C₆-C₂₂-Alkenylrest ist. Diese Verbindungen, die größtenteils bekannt sind, sind in an sich bekannter Weise durch Umsetzung von Ethylenoxid mit einem Amin R-NH₂ erhältlich.

Bevorzugt werden solche Verbindungen B), in denen R ein C₁₂- bis C₁₈-n-Alkylrest ist. Auch Gemische verschiedener ethoxylierter Amine B kommen in Betracht, z.B. das Handelsprodukt Armostat® 400 der Firma Akzo, Düren, bei dem es sich um ein Gemisch von ethoxylierten C₁₂- und C₁₄-Alkylaminen handelt.

Als erfindungswesentliches Merkmal haben die Verbindungen B) eine Hazen-Farbzahl von unter 300. Die Hazen-Farbzahl wird nach DIN 53409 bestimmt und ist auch als APHA-(American Public Health Association)-Wert bekannt. Sie gibt die Anzahl mg Platin (als Kaliumhexachloroplatinat(IV) (K₂PtCl₆) und Kobalt(II)chlorid (CoCl₂ · 6H₂O) im Verhältnis 1,246 : 1 in 1000 ml wäßriger Salzsäure) an, welche in gleicher Schichtdicke die gleiche oder annähernd die gleiche Farbe wie in Probe aufweist. Die Farbzahl 300 entspricht einer schwach gelblichen Färbung.

Liegt die Hazen-Farbzahl von B) unter 300, bleibt die Färbung des Kunststoffes, der mit einem löslichen Farbstoff eingefärbt wurde, konstant. Bei einer Farbzahl über 300 machen sich unter den Verarbeitungsbedingungen und danach im Laufe der Zeit die eingangs geschilderten unerwünschten Verfärbungen bemerkbar, was vermutlich auf Verunreinigungen zurückzuführen ist, welche zu unerwünschten Reaktionen neigen, deren Reaktionsprodukte die Färbung zunehmend beeinträchigen.

Verbindungen B) mit einer Farbzahl über 300 bedürfen daher der Reinigung z.B. durch Destillation oder durch Behandlung mit einem Adsorbens wie Aktivkohle. Bevorzugt sind Verbindungen mit einer Farbzahl unter 260.

Der Anteil der antistatisch wirkenden Verbindungen B an den Formmassen beträgt üblicherweise 0,01 bis 10, bevorzugt 0,05 bis 8 und besonders bevorzugt 0,1 bis 5 %.

Vorzugsweise setzt man sowohl den Farbstoff A) als auch das Antistatikum B) in Form homogener Konzentrate ein. Diese sog. Masterbatches enthalten den betreffenden Kunststoff und vergleichsweise große Mengen eines oder mehrerer Zusatzstoffe. Die Konzentrate lassen sich leichter gleichmäßig in große Mengen des Kunststoffes einarbeiten als die reinen Verbindungen A) bzw. B) allein.

Die thermoplastischen Formmassen, in denen der lösliche Farbstoff A) und das ethoxylierten Amin B) enthalten sind, können aus verschiedenen Polymerisaten als Basismaterial aufgebaut sein.

Geeignete Polymere sind insbesondere Homo- und Copolymerisate von Styrol, α-Methylstyrol, Acrylnitril, Methacrylnitril, von (C₁- bis C₁₂-Alkyl)acrylaten und -methacrylaten und von Butadien.

Beispiele für derartige Polymere sind
- Polystyrol,
- Copolymerisate aus Styrol und Acrylnitril, in denen das Styrol gänzlich oder zum Teil durch α-Methylstyrol und das Acrylnitril gänzlich oder zum Teil durch Methacrylnitril ersetzt sein kann, und
- Polymethylmethacrylat.

Es kommen auch Gemische dieser Polymerisate mit kautschukelastischen Polymeren, z.B. Polybutadien und/oder Polyalkylacrylat in Betracht.

Weitere geeignete Basismaterialien sind Homo- und Copolymerisate des Ethylens, Propylens, Isobutens und But-1-ens. Außerdem seien Polykondensations- und Polyadditionsprodukte wie Polyester, Polyamide, Polyurethane, Polycarbonate und Polyphenylenether genannt.

Darüber hinaus können der Farbstoff A) und das ethoxylierte Amin B) auch in thermoplastischen Formmassen enthalten sein, die aus Mischungen (Blends) der genannten Polymeren aufgebaut sind.

Selbstverständlich können die erfindungsgemäßen Formmassen noch weitere verarbeitungs- und anwendungstechnische Hilfsmittel wie Gleit- und Entformungsmittel, Flammschutzmittel, Pigmente, Antioxidantien, Stabilisatoren gegen Lichteinwirkung sowie faser- und pulverförmige Füll- und Verstärkungsmittel in den für diese Mittel üblichen Mengen enthalten.

Die Herstellung der erfindungsgemäßen Formmassen erfolgt in an sich bekannter Weise, so daß sich nähere Angaben hierzu erübrigen.

Aus den Formmassen lassen sich in bekannter Weise, z.B. nach dem Extrusions- oder Spritzgußverfahren, Formkörper aller Art herstellen.

Die erfindungsgemäßen Formmassen zeichnen sich durch eine hohe Farbkonstanz aus. Die Farbe des bei der Extrusion erhaltenen Kunststoff-Granulates verändert sich bei der Weiterverarbeitung nicht und es werden Formkörper mit beständiger Färbung erhalten.

Besondere Vorteile bieten die erfindungsgemäßen Formmassen im Falle von Solvent Yellow 93 (Color Index Nr. 48160), denn Färbungen mit diesem für die Einfärbung von Kunststoffen besonders wichtigen Farbstoff zeigten sich bisher gegen Verfärbungen besonders anfällig.

### Beispiele

In ein handelsübliches Copolymerisat aus 67 Gew.-% Styrol und 33 Gew.-% Acrylnitril wurden in bekannter Weise 0,003 Gew.-% einer Farbstoffmischung A) aus
- Solvent Yellow 93 der Struktur (I) (C.I.-Nr. 48160), Anteil an der Farbstoffmischung 70 Gew.-%,
- Solvent Violet 13 (C.I.-Nr. 60725) der Struktur 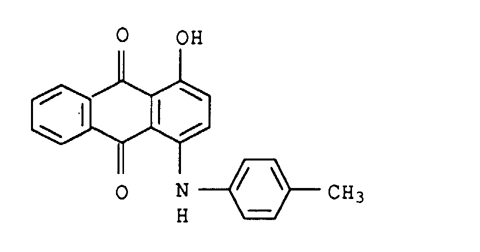 Anteil an der Farbstoffmischung 24 Gew.-%,
- Solvent Red 139 der Struktur 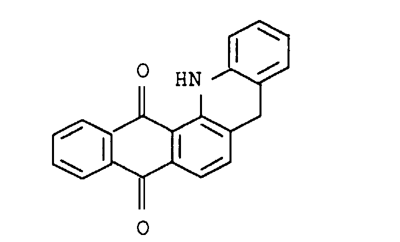 Anteil an der Farbstoffmischung 6 Gew.-%,
und jeweils
B/1) 2 Gew.-% eines Gemisches der Hazen-Farbzahl 250 aus bis(ethoxyliertem) C₁₂-n-Alkylamin und bis(ethoxyliertem) C₁₄-n-Alkylamin,
bzw. zum Vergleich
B/1') 2 Gew.-% eines B/1) entsprechenden Gemisches mit einer Hazen-Farbzahl 320
auf einem Extruder innig vermischt, extrudiert und granuliert.

Das Granulat wurde bei 230°C bzw. 280°C zu Rundschreiben verarbeitet.

Die Hazen-Farbzahl des Antistatikums wurde nach DIN 53409 bestimmt; die Konzentrationsangaben beziehen sich jeweils auf das Gewicht der Formmasse.

Die Farbstabilität der Mischungen wurde visuell beurteilt. Es wurde ermittelt, in welchem Ausmaß sich die Farbe der bei 230°C bzw. 280°C hergestellten Rundscheiben von der Farbe solcher Rundscheiben unterscheiden, die in gleicher Weise hergestellt wurden, aber kein Antistatikum enthielten. Gegenüber diesen Vergleichs-Rundscheiben zeigten die B/1) enthaltenden Rundscheiben unabhängig von der Spritzguß-Schmelzetemperatur keine Verfärbung, wogegen die Farbqualität im Falle der Verwendung von B/1') deutlich sichtbar schlechter war.

## Patentansprüche

1. Thermoplastische Formmassen, enthaltend
A) einen in diesen Formmassen löslichen Farbstoff und
B) ein N,N-Bis (2-hydroxyethyl)-C₆-C₂₂-alkylamin oder N,N-Bis(2-hydroxyethyl)-C₆-C₂₂-alkenylamin, wobei diese Verbindung eine Hazen-Farbzahl nach DIN 53409 unter 300 hat.

2. Thermoplastische Formmassen nach Anspruch 1, in denen der lösliche Farbstoff A) Solvent Yellow 93 (C.I. Nr. 48160) ist.

3. Thermoplastische Formmassen nach Anspruch 1 oder 2 auf Basis von Homo- oder Copolymerisaten von Styrol, α-Methylstyrol, Acrylnitril, Methacrylnitril, (C₁- bis C₁₂-Alkyl)acrylaten oder -methacrylaten oder konjugierten aliphatischen Dienen.

4. Thermoplastische Formmassen nach Anspruch 1 oder 2 auf Basis von Homo- oder Copolymerisaten des Ethylens, Propylens, Isobutens und But-1-ens.

5. Verwendung der thermoplastischen Formmassen gemäß den Ansprüchen 1 bis 4 zur Herstellung von Formkörpern.

6. Formkörper aus den thermoplastischen Formmassen gemäß den Ansprüchen 1 bis 4.

## Claims

1. Thermoplastic molding materials comprising
A) a dye which is soluble therein, and
B) a N,N-bis(2-hydroxyethyl)-C₆-C₂₂-alkylamine or N,N-bis(2-hydroxyethyl)-C₆-C₂₂-alkenylamine, this compound having a Hazen color number as specified in German Standards Specification DIN 53409 of below 300.

2. Thermoplastic molding materials as claimed in claim 1 wherein the soluble dye A) is Solvent Yellow 93 (C.I. No. 48160).

3. Thermoplastic molding materials as claimed in claim 1 or 2, based on homo- or copolymers of styrene, α-methylstyrene, acrylonitrile, methacrylonitrile, C₁-C₁₂-alkyl acrylates or methacrylates or conjugated aliphatic dienes.

4. Thermoplastic molding materials as claimed in claim 1 or 2, based on homo- or copolymers of ethylene, propylene, isobutene and 1-butene.

5. The use of the thermoplastic molding materials of any of claims 1 to 4 for producing molded articles.

6. Molded articles from the thermoplastic molding materials of any of claims 1 to 4.

## Revendications

1. Masses à mouler thermoplastiques contenant
A) un colorant soluble dans ces masses à mouler et
B) une N,N-bis(2-hydroxyéthyl)(alkyle en C₆-C₂₂)amine ou une N,N-bis(2-hydroxyéthyl)(alcényle en C₆-C₂₂)amine, où ce composé présente un indice de trouble selon DIN 53409 inférieur à 300.

2. Masses à mouler thermoplastiques selon la revendication 1, dans lesquelles le colorant soluble A) est le Solvent Yellow 93 (C.I. Nr. 48160).

3. Masses à mouler thermoplastiques selon la revendication 1 ou 2 à base d'homo- ou de copolymères de styrène, d'α-méhtylstyrène, d'acrylonitrile, de méthacrylonitrile, d'acrylates ou de méthacrylates d'alkyle en C₁-C₁₂ ou de diènes aliphatiques conjugués.

4. Masses à mouler thermoplastiques selon la revendication 1 ou 2 à base d'homo- ou de copolymères de l'éthylène, du propylène, de l'isobutène et du 1-butène.

5. Utilisation de masses à mouler thermoplastiques selon l'une quelconque des revendications 1 à 4 pour la préparation de corps moulés.

6. Corps moulés à base de masses à mouler thermoplastiques selon l'une quelconque des revendications 1 à 4.
